Europäisches Patentamt

European Patent Office

Office européen des brevets

(11) Numéro de publication : **0 298 871 B1**

## (12) FASCICULE DE BREVET EUROPEEN

(45) Date de publication du fascicule du brevet :
**01.04.92 Bulletin 92/14**

(51) Int. Cl.⁵ : **B60T 13/46,** B60K 26/00, B60K 23/02

(21) Numéro de dépôt : **88401779.9**

(22) Date de dépôt : **07.07.88**

(54) **Ensemble de commande d'embrayage, d'accélération et de freinage pour véhicule automobile, et véhicule équipé de cet ensemble.**

(30) Priorité : **08.07.87 FR 8709705**

(43) Date de publication de la demande :
**11.01.89 Bulletin 89/02**

(45) Mention de la délivrance du brevet :
**01.04.92 Bulletin 92/14**

(84) Etats contractants désignés :
**DE GB IT**

(56) Documents cités :
**FR-A- 2 371 324
GB-A- 2 102 089
US-A- 4 535 680**

(73) Titulaire : **AUTOMOBILES PEUGEOT
75, avenue de la Grande Armée
F-75116 Paris (FR)**
Titulaire : **AUTOMOBILES CITROEN
62 Boulevard Victor-Hugo
F-92200 Neuilly-sur-Seine (FR)**

(72) Inventeur : **Petiot, Jean-Paul
42 route d'Orsay
F-91460 Marcoussis (FR)**

(74) Mandataire : **Durand, Yves Armand Louis et al
Cabinet Z. Weinstein 20, Avenue de Friedland
F-75008 Paris (FR)**

Jouve, 18, rue Saint-Denis, 75001 PARIS

# Description

La présente invention a essentiellement pour objet un ensemble de commande d'embrayage, d'accélération et de freinage pour véhicule automobile.

Elle vise également un véhicule d'un type quelconque équipé de cet ensemble.

On connaît déjà des systèmes de commande de freinage comprenant essentiellement un mécanisme d'assistance à dépression constitué par un servo-moteur interposé entre un maître-cylindre de commande hydraulique de freinage et un tablier portant une pédale de freinage susceptible d'agir sur le maître-cylindre ainsi d'ailleurs que des pédales d'accélération et d'embrayage (EP-A- 0 075 505).

Ces deux dernières pédales commandent respectivement des systèmes indépendants permettant l'accélération en agissant par exemple sur un câble, et l'embrayage et le débrayage en agissant sur un maître-cylindre d'embrayage.

On connaît déjà des soufflets étanches dans des servo-moteurs pour loger des barres de liaison (cf. GB-A-2 102 089) ou de renforcement (cf. US-A-4,535,680).

En d'autres termes, jusqu'à présent, les véhicules automobiles étaient équipés de moyens indépendants et séparés assurant respectivement les fonctions de commande de freinage, d'accélération et de débrayage, et il n'a pas encore été proposé de réunir ou combiner tous ces moyens sur un support qui puisse se prêter à cela et qui peut être avantageusement constitué par le mécanisme de commande de freinage avec servo-moteur, de façon à réaliser un ensemble compact, présentant un faible encombrement, peu coûteux, facile à réaliser et à insonoriser, et pouvant être commodément assemblé et monté dans une voiture par un robot.

Le document FR-A-2 371 324 décrit un système de pédale pour les freins et aussi pour l'embrayage des véhicules, dont le mécanisme forme un sous-ensemble de montage avec le reservoir à dépression et le maître-cylindre, le carter de ce mécanisme servant de support à un palier destiné à la tige de commande de la pédale d'accélérateur.

Aussi, l'invention a pour but de combler cette lacune en proposant un ensemble unitaire regroupant les fonctions ci-dessus de freinage, d'accélération et de débrayage, et comportant tous les avantages ci-dessus mentionnés.

A cet effet, l'invention a pour objet un ensemble de commande d'embrayage, d'accélération et de freinage pour véhicule automobile et dans lequel la commande de freinage est constituée par un mécanisme d'assistance à dépression comprenant notamment un servo-moteur interposé entre un maître-cylindre de commande hydraulique de freinage et un tablier portant notamment des pédales de freinage, d'accélération et d'embrayage, caractérisé par des moyens traversant de manière étanche le servo-moteur et reliant respectivement les pédales d'accélération et d'embrayage à des mécanismes de commande d'accélération et d'embrayage solidaires du maître-cylindre et/ou du servo-moteur.

On comprend donc qu'on tire avantage de l'existence du support constitué par le servo-moteur et son maître-cylindre associé pour y fixer les mécanismes de commande d'accélération et d'embrayage, qui, autrement, représenteraient un encombrement notable et des temps de montage importants dans le véhicule.

Suivant une autre caractéristique de l'invention, les moyens précités sont constitués par des entretoises tubulaires disposées sensiblement parallèlement à l'axe du servo-moteur, serties par leurs extrémités sur le boîtier de ce servo-moteur et dans lesquelles passent des axes reliant les pédales d'accélération et d'embrayage à leurs mécanismes respectifs.

Selon encore une autre caractéristique de l'invention, le boîtier du servo-moteur contenant un piston d'assistance et une membrane flexible attelée entre le boîtier et le piston, ladite membrane comporte d'une part des orifices laissant le passage aux entretoises précitées et dont les bords sont montés de façon étanche sur lesdites entretoises par l'intermédiaire d'un bourrelet, et d'autre part, des soufflets entourant chaque entretoise pour permettre le déploiement de la membrane lors du déplacement du piston d'assistance.

Le bourrelet précité peut comporter une gorge coopérant avec une protubérance annulaire ou autre formée sur la périphérie extérieure de l'entretoise.

Selon une variante, le bourrelet précité est maintenu captif dans une coupelle solidaire du boîtier du servo-moteur au niveau du sertissage de l'entretoise sur ce boîtier.

Selon encore une autre variante, le bourrelet précité est renforcé par un insert et est maintenu en appui sur l'entretoise entre un épaulement prévu sur cette dernière et la paroi interne du boîtier du servo-moteur.

L'ensemble selon cette invention est encore caractérisé par le fait que les maîtres-cylindres de freinage et d'embrayage sont regroupés dans un carter unique fixé sur le servo-moteur et sur lequel est monté un réservoir unique de fluide hydraulique.

Le mécanisme de commande d'accélération peut être constitué par un levier en L monté pivotant sur le boîtier du servo-moteur et dont l'une des branches est montée, par l'intermédiaire d'une rotule, sur l'extrémité de l'axe traversant le servo-moteur et opposée à celle reliée à la pédale d'accélérateur, tandis qu'à l'autre branche du L est fixé un câble d'accélérateur passant dans un guide solidaire du carter unique précité.

Suivant une variante, le mécanisme de commande d'accélération est constitué par une pièce cylindrique solidaire de l'extrémité de l'axe traversant le servo-moteur et opposée à celle reliée à la pédale d'accélérateur, cette pièce étant d'une part montée mobile dans un élément tubulaire solidaire du boîtier du servo-moteur et pouvant d'autre part actionner une gaine dans laquelle est monté un câble d'accélérateur fixé sur ledit élément tubulaire.

On comprend donc déjà de ce qui précède que les divers mécanismes de commande d'embrayage, d'accélération et de freinage constituent un ensemble unitaire, dont les pièces s'appuient en quelque sorte sur les pédales d'embrayage, d'accélérateur et de freinage traversant le tablier, et permettant d'actionner lesdites pièces par poussée sur des axes qui se déplacent dans le même sens que celui de la poussée sur les pédales et qui, pour ce qui concerne l'accélération et l'embrayage, traversent le boîtier du servo-moteur.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue en élévation et coupe longitudinale d'un ensemble conforme à cette invention;

La figure 2 est une vue agrandie et en coupe d'une variante des moyens de fixation étanche de la membrane du servo-moteur sur les entretoises ;

La figure 3 est une vue similaire à la figure 2 mais montrant encore une autre variante des moyens de fixation étanche de la membrane sur les entretoises ;

La figure 4 est une vue agrandie, et partiellement en coupe, du système de commande du câble d'accélérateur selon cette invention ; et

La figure 5 est une vue partielle et en coupe axiale d'une variante de ce système.

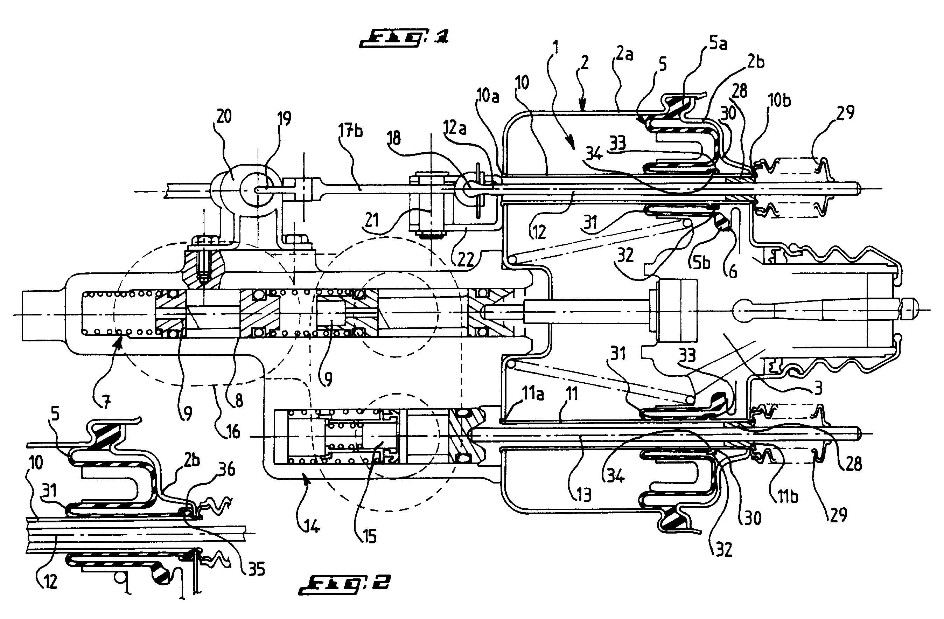

En se reportant notamment à la figure 1, on voit un mécanisme d'assistance à dépression constitué par un servo-moteur 1 enfermé dans un boîtier 2 formé de deux demi-coquilles 2a, 2b et contenant un piston d'assistance 3.

Le boîtier 1 est séparé en deux chambres par une membrane flexible 5 attelées entre le boîtier 1 et le piston d'assistance 3. Plus précisément, la membrane 5 comporte d'une part un bourrelet périphérique extérieur 5a inséré entre les bords des deux demi-coquilles 2a, 2b, et d'autre part, un bourrelet 5b délimitant les bords d'une ouverture et s'engageant dans une gorge 6 ménagée dans le piston 3 qui est commandé par une pédale de freinage (non représentée) elle-même montée sur un tablier qui n'est pas représenté non plus et sur lequel sont également montées des pédales d'embrayage et d'accélération situées du côté de l'habitacle du véhicule.

Sur le servo-moteur est fixé un corps ou carter 7 qui, suivant l'exemple de réalisation représenté, comprend une chambre 8 contenant deux pistons 9 associés au piston d'assistance 3 et quine font pas partie de la présente invention.

Toutes les dispositions ci-dessus sont connues en soi et ne nécessitent pas d'explications complémentaires.

Conformément à l'invention, le boîtier 2 du servo-moteur 1 est traversé de manière étanche par deux entretoises 10, 11 qui peuvent être symétriques ou non par rapport à l'axe du servo-moteur. Ces deux entretoises tubulaires sont serties par leurs extrémités 10a, 10b, 11a, 11b respectivement sur les demi-coquilles 2a, 2b du boîtier 2 du servo-moteur 1.

Dans l'entretoise 10 passe un axe 12 relié à la pédale d'accélérateur située sur la droite de la figure 1 derrière le tablier (non représenté) et, dans l'entretoise tubulaire 11, passe un axe 13 relié à la pédale d'embrayage montée, comme la pédale d'accélérateur, sur le tablier précité.

On a montré en 14 sur la figure 1 un maître-cylindre de débrayage regroupé avec le maître-cylindre 8, 9 de freinage, dans le carter monobloc 7. Ce maître-cylindre d'embrayage comporte un piston 15 relié à l'axe 13 traversant l'entretoise tubulaire 11.

On remarquera ici que, sur le carter unique 7 est monté un réservoir unique de fluide hydraulique 16 alimentant tous les maîtres-cylindres.

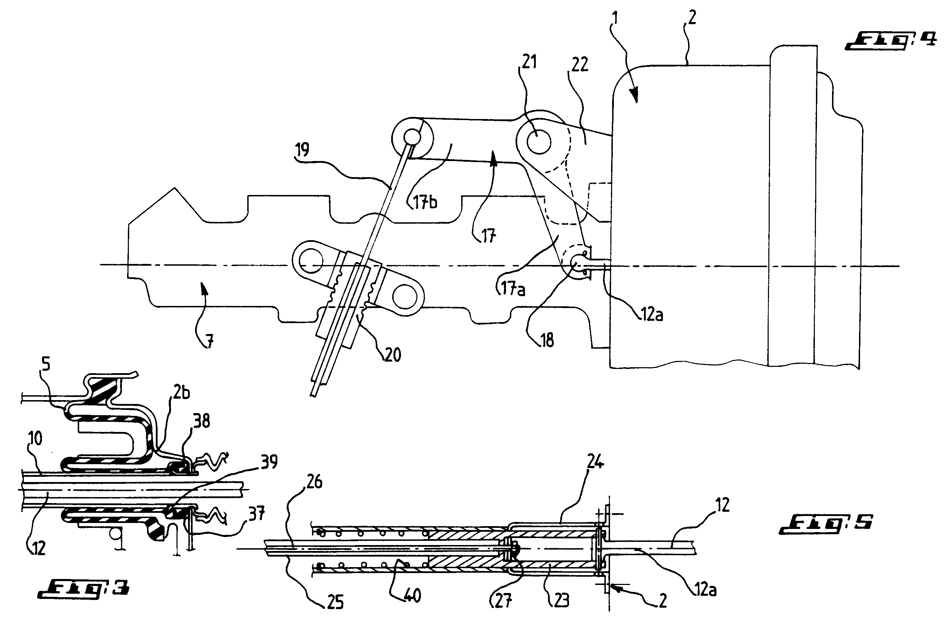

Comme on le voit sur les figures 1 et 4, l'extrémité 12a de l'axe 12 passant dans l'entretoise tubulaire 10 est reliée à un levier en L 17 fixé de manière pivotante sur le boîtier 2 du servo-moteur 1. Plus précisément, ce levier 17 comprend une branche 17a montée par l'intermédiaire d'une rotule 18 sur l'extrémité 12a de l'axe 12. Sur l'autre branche 17b du levier 17 est fixé un câble d'accélérateur 19 passant dans un guide 20 et relié, comme connu en soi, à un système d'admission de carburant. On a montré en 21 sur les figures 1 et 4 l'axe d'articulation du levier en L 17 sur un étrier ou analogue 22 solidaire du boîtier 2 de servo-moteur 1.

Suivant un autre mode de réalisation de mécanisme de commande d'accélérateur représenté sur la figure 5, une pièce cylindrique 23 est solidaire de l'extrémité 12a de l'axe 12, cette pièce étant d'une part montée mobile dans un élément tubulaire 24 fixé sur le boîtier 2 du servo-moteur 1 et pouvant d'autre part actionner une gaine 25 dans laquelle est monté un câble d'accélérateur 26 fixé sur l'élément tubulaire 24. On a montré en 27 sur la figure 5, un embout, rivet ou analogue prévu à l'extrémité du câble 26 et retenant ce câble contre la paroi de l'élément tubulaire 24. Ainsi, on comprend qu'en poussant l'axe 12, à l'aide de la pédale d'accélérateur, on poussera la pièce cylindrique 23 et donc la gaine 25 qui allongera sa course et provoquera du même coup le déplacement de l'extrémité du câble non représenté et opposé à l'extrémité 27, et cela de façon à provoquer l'actionnement du système d'alimentation en carburant via le câble 26. On a montré en 40 un ressort agissant à l'encontre du déplacement de la pièce 23 dans l'élément tubulaire 24.

Revenant à la figure 4, on comprend également qu'en poussant l'axe 12, on provoquera le basculement du levier 17 et par conséquent l'actionnement du câble d'accélérateur 19.

En se reportant maintenant à nouveau à la figure 1, on voit que les axes pousseurs 12 et 13 sont centrés d'un côté, c'est-à-dire du côté de l'extrémité 10a, 11a par les systèmes qui leurs sont associés et que l'on vient de décrire, et sont centrés de l'autre côté par un joint souple 28, par exemple en mousse, une étanchéité étant prévue et réalisée par des manchons souples en caoutchouc ou analogue 29 agencés entre les axes 12, 13 et la coquille 2b du boîtier 2 au niveau de la traversée de cette coquille par les entretoises tubulaires 10, 11.

La membrane flexible 5 comporte bien entendu des orifices 30 pour laisser le passage aux entretoises tubulaires 10 et 11, comme on le voit bien sur la figure 1. Le bord de ces orifices 30 est constitué par un bourrelet assurant l'étanchéité, et on notera ici que la membrane flexible 5 forme des soufflets ou des plis 31 entourant les entretoises 10 et 11 de façon à permettre le déploiement de la membrane lors du déplacement du piston d'assistance 3.

Suivant le mode de réalisation représenté sur la figure 1, le bourrelet précité visible en 32 comporte une gorge intérieure 33 coopérant avec une protubérance 34, par exemple annulaire, formée sur la périphérie extérieure des entretoises 10, 11.

Suivant la réalisation visible sur la figure 2, le bourrelet visible en 35 est monté captif dans une coupelle 36 solidaire de la paroi interne de la coquille 2b du boîtier 2 du servo-moteur 1 au niveau du sertissage des entretoises sur cette coupelle.

Enfin, suivant le mode de réalisation visible sur la figure 3, le bourrelet, visible en 37 est renforcé par un insert 38 et est maintenu en appui sur les entretoises tubulaires 10, 11 entre un épaulement 39 prévu sur la périphérie extérieure de ces dernières et la paroi interne de la demi-coquille 2b du boîtier 2 contenant le servo-moteur 1.

On a donc réalisé suivant l'invention un ensemble de commande d'embrayage, d'accélération et de freinage qui est particulièrement compact et peu encombrant, qui peut être assemblé et monté dans une voiture par un robot et dont les trois axes de commande d'accélérateur, d'embrayage et de freinage fonctionnent par poussée en comprimant les pédales, de sorte qu'au total, on peut, grâce à un tel ensemble améliorer de façon importante l'insonorisation du tablier autour dudit ensemble et par conséquent le confort de l'habitacle d'un véhicule.

Bien entendu, l'invention n'est nullement limitée aux modes de réalisation décrits et illustrés qui n'ont été donnés qu'à titre d'exemple.

Au contraire, l'invention comprend tous les équivalents techniques des moyens décrits ainsi que leurs combinaisons si celles-ci sont effectuées suivant son esprit.

**Revendications**

1. Ensemble de commande d'embrayage, d'accélération et de freinage pour véhicule automobile, du type comprenant un servo-moteur à dépression (1) associé à un maître-cylindre (8, 9) de commande de freinage et comprenant un boîtier (2) dans lequel est maintenue une membrane flexible (5) solidaire d'un piston d'assistance (3) relié à des pistons (9) du maître-cylindre de commande de freinage, caractérisé en ce que le boîtier (2) et la membrane flexible (5) du servo-moteur (1) sont traversés de manière étanche par deux entretoises tubulaires (10, 11) disposées parallèlement à l'axe du servo-moteur et dans lesquelles coulissent des axes (12, 13) qui relient respectivement les pédales d'accélération et d'embrayage à des mécanismes de commande d'accélératior et d'embrayage solidaires du carter (7) du maître-cylindre (8, 9) fixé sur le servo-moteur (1), et qui sont actionnés dans le sens poussée par lesdites pédales.

2. Ensemble selon la revendication 1, caractérisé en ce que les deux entretoises tubulaires (10, 11) sont serties par leurs extrémités (10a, 10b, 11a, 11b) sur le boîtier (2) du servo-moteur (1) et la membrane flexible (5) comporte d'une part des orifices (30) laissant le passage auxdites entretoises et dont les bords sont montés de façon étanche sur ces entretoises par l'intermédiaire d'un bourrelet (32, 35, 37), et d'autre part des soufflets (31) entouranrt chaque entretoise pour permettre le déploiement de la membrane (5) lors du déplacement du piston d'assistance (3).

3. Ensemble selon la revendication 2, caractérisé en ce que le bourrelet précité (32) comporte une gorge (33) coopérant avec une protubérance (34) formée sur la périphérie extérieure de l'entretoise.

4. Ensemble selon la revevendication 2, caractérisé en ce que le bourrelet précité (35) est maintenu captif dans une coupelle (35) solidaire du boîtier (2) du servo-moteur (1) au niveau du sertissage de l'entretoise sur ce boîtier.

5. Ensemble selon la revendication 2, caractérisé en ce que le bourrelet précité (37) est renforcé par un insert (38) et est maintenu en appui sur l'entretoise entre un épaulement (39) prévu sur cette dernière et la paroi interne du boîtier (2) du servo-moteur.

6. Ensemble selon l'une des revendications précédentes, caractérisé en ce que les maîtres-cylindres de freinage (8, 9) et d'embrayage (14) sont regroupés dans le carter (7) fixé sur le servo-moteur (1) et sur lequel est monté un réservoir (15) unique de fluide hydraulique.

7. Ensemble selon l'une des revendications précédentes, caractérisé en ce que le mécanisme de commande d'accélération est constitué par un levier en L (17) monté pivotant sur le boîtier (2) de servo-moteur et dont l'une (17a) des branches est montée par l'intermédiaire d'une rotule (18) sur l'extrémité (12a) de l'axe (12) traversant le servo-moteur et opposée à celle reliée à la pédale d'accélération, tandis qu'à l'autre branche (17b) du L est fixé un câble d'accélérateur (19) passant dans un guide (20) solidaire du carter précité (7).

8. Ensemble selon l'une des revendications 1 à 5, caractérisé en ce que le mécanisme de commande d'accélération est constitué par une pièce cylindrique (23) solidaire de l'extrémité (12a) de l'axe (12) traversant le servo-moteur (1) et opposée à celle reliée à la pédale d'accélérateur, cette pièce étant d'une part montée mobile dans un élément tubulaire (24) solidaire du boîtier (2) du servo-moteur (1) et pouvant d'autre part actionner une gaine (25) dans laquelle est montée un câble d'accélération (26) fixé sur ledit élément tubulaire (24).

9. Véhicule automobile équipé d'un dispositif selon l'une de revendications 1 à 8.

**Patentansprüche**

1. Kupplungs- Beschleunigungs- und Bremsbedienungsanordnung für ein Kraftfahrzeug, derjenigen Gattung mit einem, einem Bremshauptbetätigungszylinder (8,9) zugeordneten Vakuumsservomotor (1), der ein Gehäuse (2) aufweist, in welchem eine biegsame Membran (5) gehaltert ist, die mit einem, mit Kolben (9) des Bremshauptbetätigungszylinders verbundenen Hilfskolben (3) fest verbunden ist, dadurch gekennzeichnet, dass das Gehäuse (2) und die biegsame Membran (5) des Servomotors (1) durch zwei parallel zur Achse des Servomotors angeordnete rohrförmige Zwischenstücke (10,11) dicht durchsetzt sind, in welchen die Stangen (12,13) gleiten, die jeweils die Beschleunigungs- und Kupplungspedale mit, mit dem an dem Servomotor (1) befestigten Gehäuse (7) des Hauptzylinders (8,9) fest verbundenen Beschleunigungs- und Kupplungssteuermechanismen verbinden und die in der Schubrichtung durch die besagten Pedale betätigt werden.

2. Anordnung nach Anspruch 1, dadurch gekennzeichnet, dass beide rohrförmige Zwischenstücke (10,11) mit ihren Enden (10a, 10b, 11a, 11b) an dem Gehäuse (2) des Servomotors (1) eingefasst sind und die biegsame Membran (5) einerseits den Durchgang für die besagten Zwischenstücke freilassende Oeffnungen (30), deren Ränder an diesen Zwischenstücken über einen Wulst (32,35,37) dicht angeordnet sind und andererseits die Zwischenstücke jeweils umgebende Balge (31), um das Entfalten der Membran (5) bei der Verschiebung des Hilfskolbens (3) zu gestatten, aufweist.

3. Anordnung nach Anspruch 2, dadurch gekennzeichnet, dass der vorgenannte Wulst (32) eine, mit einem an dem Aussenumfang des Zwischenstückes gebildeten Vorsprung (34) zusammenwirkende Nut (33) aufweist.

4. Anordnung nach Anspruch 2, dadurch gekennzeichnet, dass der vorgenannte Wulst (35) in einem mit dem Gehäuse (2) des Servomotors (1) im Bereich der Einfassung des Zwischenstückes an diesem Gehäuse fest verbundenen Näpfchen (36) festgehalten wird.

5. Anordnung nach Anspruch 2, dadurch gekennzeichnet, dass der vorgenannte Wulst (37) durch einen Einsatz (38) verstärkt ist und in Abstützung an dem Zwischenstück zwischen einer an diesem letzteren vorgesehenen Schulter (39) und der Innenwandung des Gehäuses (2) des Servomotors gehalten wird.

6. Anordnung nach einem der vorangehenden Ansprüche, dadurch gekennzeichnet, dass die Brems- und Kupplungshauptzylinder (8,9;14) in dem an dem Servomotor (1) befestigten Gehäuse, an welchem ein einziger Behälter (16) für ein hydraulisches fliessfähiges Medium angeordnet ist, zusammengestellt sind.

7. Anordnung nach einem der vorangehenden Ansprüche, dadurch gekennzeichnet, dass der Beschleunigungsbedienungsmechanismus durch einen schwenkbar an dem Gehäuse (2) des Servomotors angeordneten L-förmigen Hebel (17) gebildet wird, dessen einer Arm (17a) über ein Kugelgelenk (18) an dem Ende (12a) der den Servomotor durchsetzenden Stange (12) angeordnet ist, welches Ende demjenigen, das mit dem Beschleunigunspeda1 verbunden ist, entgegengesetzt ist, während der andere Arm (17b) des L's an einem durch eine mit dem vorgenannten Gehäuse (7) fest verbundenen Führung (20) verlaufenden Beschleu nigerdrahtseil (19) befestigt ist.

8. Anordnung nach einem der Ansprüche 1 bis 6, dadurch gekennzeichnet, dass der Beschleunigungsbedienungmechanismus durch ein mit dem Ende (12a) der den Servomotor (1) durchsetzenden Stange (12) fest verbundenes zylindrisches Stück (23) gebildet wird, welches Ende demjenigen, das mit dem Beschleunigungspeda1 verbunden ist, entgegengesetzt ist, wobei dieses Stück einerseits in einem mit dem Gehäuse (2) des Servomotors (1) fest verbundenen rohrförmigen Element (24) angeordnet ist und andererseits eine Hülle (25), in welcher das an dem besagten rohrförmigen Element (24) befestigte Beschleunigungsdrahtseil (26) angeordnet ist, betätigen kann.

9. Mit einer Vorrichtung nach einem der Ansprüche 1 bis 8 ausgestattetes Kraftfahrzeug.

**Claims**

1. Clutch, acceleration and braking control system for an automotive vehicle, of the type comprising a vacuum-operated servo-motor (1) associated with a brake control master cylinder (8, 9) and comprising a casing (2) in which is held a flexible membrane (5) made fast to an assisting piston (3) connected to pistons (9) of the brake control master cylinder, characterized in that through the casing (2) and the flexible membrane (5) of the servo-motor (1) are extending in a fluid-tight manner two tubular spacers (10, 11) disposed in parallel relation to the axis of the servo-motor and in which are sliding shafts (12, 13) which connect the acceleration and clutch pedals, respectively, to acceleration and clutch control mechanisms made fast to the housing (7) of the master cylinder (8, 9) fastened onto the servo-motor (1) and which are actuated in the thrust direction by the said pedals.

2. System according to claim 1, characterized in that both tubular spacers (10, 11) are crimped with their ends (10a, 10b, 11a, 11b) onto the casing (2) of the servo-motor (1) and the flexible membrane (5) comprises on the one hand openings (30) leaving a passage way for the said spacers and the edges of which are mounted in a fluid-tight fashion on these spacers through the medium of a bead (32, 35, 37) and on the other hand bellows (31) surrounding each spacer for allowing the unfolding of the membrane (5) upon the displacement of the assisting piston (3).

3. System according to claim 2, characterized in that the aforesaid bead (32) comprises a groove (33) co-operating with a protrusion (34) formed on the external periphery of the spacer.

4. System according to claim 2, characterized in that the aforesaid bead (35) is kept captive in a cup (36) made fast to the casing (2) of the servo-motor (1) at the crimping of the spacer onto this casing.

5. System according to claim 2, characterized in that the aforesaid bead (37) is reinforced by an insert (38) and is maintained in bearing relationship upon the spacer between a shoulder (39) provided on the latter and the inner wall of the casing (2) of the servo-motor.

6. System according to one of the foregoing claims, characterized in that the brake and clutch master cylinders (8, 9 ; 14) are grouped together in the housing (7) fastened onto the servo-motor (1) and on which is mounted a single hydraulic fluid tank (16).

7. System according to one of the foregoing claims, characterized in that the acceleration control mechanism consists of an L-shaped lever (17) pivotally mounted onto the servo-motor casing (2) and one (17a) of the arms of which is mounted through the medium of a knee-joint (18) onto the end (12a) of the shaft (12) extending through the servo-motor and opposite to that connected to the acceleration pedal whereas to the other arm (17b) of the L is fastened an accelerator cable (19) passing in a guide (20) made fast to the aforesaid housing (7).

8. System according to one of claims 1 to 6, characterized in that the acceleration control mechanism consists of a cylindrical part (23) made fast to the end (12a) of the shaft (12) extending through the servo-motor (1) and opposite to that connected to the accelerator pedal, this part being on the one hand mounted movably in a tubular element (24) made fast to the casing (2) of the servo-motor (1) and being capable on the other hand of actuating a sheath (25) in which is mounted the acceleration cable (26) fastened onto the said tubular element (24).

9. Automotive vehicle fitted with a device according to one of claims 1 to 8.

FIG. 1

FIG. 2

Fig.4

Fig.5

Fig.3

2

1

22

21

17

17b

19

18

17a

12a

7

20

12

12a

24

2

23

27

40

25

26

39

37

38

2b

5

10

12